# EUROPÄISCHE PATENTSCHRIFT

(11) **EP 1 397 428 B1**
(45) Veröffentlichungstag und Bekanntmachung des Hinweises auf die Patenterteilung: **11.08.2004**
(21) Anmeldenummer: 02745191.3
(22) Anmeldetag: 07.03.2002
(51) Int. Cl.: C08K 5/57, C08K 5/58, B01J 31/12, B01J 31/18

(54) **UNTER ABSPALTUNG VON ALKOHOLEN AUS ALKOXYSILYLENDGRUPPEN ZU ELASTOMEREN VERNETZBARE MASSEN**
MASSES WHICH MAY BE CROSS-LINKED TO GIVE ELASTOMERS WITH CLEAVAGE OF ALCOHOLS FROM ALKOXYSILYL END GROUPS
MASSES POUVANT RETICULER LORS DE LA DISSOCIATION D'ALCOOLS COMPOSES DE GROUPES TERMINAUX ALKOXYSILYLE EN ELASTOMERES

(30) Priorität: 03.05.2001 DE 10121514
(43) Veröffentlichungstag der Anmeldung: 17.03.2004
(73) Patentinhaber: Wacker-Chemie GmbH, 81737 München (DE)
(72) Erfinder: SCHEIM, UWE, D-01640 Coswig (DE); SCHURIG, Gabriele, D-01662 Meissen (DE); ZICHE, Wolfgang, D-01665 Diera (DE)
(74) Vertreter: Fritz, Helmut, Dr.
(86) Internationale Anmeldenummer: PCT/EP2002/002528
(87) Internationale Veröffentlichungsnummer: WO 2002/090431

(56) Entgegenhaltungen:
- EP-A- 0 528 508
- WO-A-97/10271
- GB-A- 1 348 402
- US-A- 3 525 778

## Beschreibung

Die Erfindung betrifft Zinnkatalysator (Z) enthaltende unter Abspaltung von Alkoholen aus Alkoxysilylendgruppen zu Elastomeren vernetzbare Massen, die als Katalysator Zinnverbindung (Z) mit einer Koordinationszahl von 5 oder 6 enthalten.

Unter Abspaltung von Alkoholen aus Alkoxysilylendgruppen zu Elastomeren vernetzbare Massen, wie unter Abspaltung von Alkoholen zu Elastomeren vernetzbare einkomponentige Organopolysiloxanmassen (RTV-1-Alkoxymassen) benötigen zur Vernetzung Katalysatoren.

Die Verwendung von Dialkylzinn(IV)verbindungen als Kondensationskatalysatoren in RTV-1- und RTV-2-Siliconkautschuken ist allgemein bekannt. In RTV-1-Alkoxymassen haben diese Zinnverbindungen allerdings den Nachteil, dass sie eine unerwünschte Spaltung der Siloxanketten durch Alkoholspuren (Equilibrierung) ebenfalls katalysieren. Diese geringe Mengen an Alkohol enstehen bei der Compoundierung durch Hydrolyse der als Vernetzer eingesetzten Alkoxysilane mit Wasser, welches duch die Rohstoffe eingeschleppt wird. Bei der Equilibrierung entstehen nicht mehr vernetzungsfähige Monoalkoxyendgruppen an der Polysiloxankette. Dadurch wird eine ausreichende Vernetzung der Masse verhindert, d.h. daß bei der bestimmungsgemäßen Verwendung entweder gar kein oder zumindest kein mechanisch ausreichend stabiles Vulkanisat erhalten wird. Die Lagerstabilität, angegeben als Zeitdauer, die die RTV-1-Alkoxymasse gelagert werden kann, ohne ihre Eigenschaften merklich zu verlieren, wird durch die Equilibrierung drastisch verringert.

Gleichartige Probleme gibt es auch bei anderen unter Abspaltung von Alkoholen zu Elastomeren vernetzbaren Systemen, wie bei Polyethern mit Alkoxysilylendgruppen. Auch dort treten aufgrund der verwendeten Dialkylzinn(IV)verbindungen als Kondensationskatalysatoren Lagerstabilitätsprobleme auf, die durch eine besonders umständliche Herstellprozedur, wie Ausheizen der Polymer-Füllstoffmischungen im Vakuum über Stunden, unterdrückt werden.

Um die Lagerstabilität zu verbessern, sind bei RTV-1-Alkoxymassen verschiedene Verfahren entwickelt worden. Zunächst wurde beispielsweise in EP-A-69 256 versucht, die Alkoholspuren durch den Zusatz von Verbindungen zu beseitigen, die mit dem Alkohol irreversibel reagieren. Solche Verbindungen werden als Scavenger bezeichnet.

Darüber hinaus hat man auch versucht scavengerfreie Mischungen herzustellen. Insbesondere eignen sich hierzu die in US-A-5,674,936 beschriebenen Titan- oder Zirkoniumkatalysatoren. Diesen Katalysatoren haftet aber der entscheidende Nachteil an, dass sie entweder stark zur Vergilbung neigen, oder sogar selbst schon gelb gefärbt sind. Dadurch wird die Herstellung von transparenten, farblosen RTV1-Mischungen verhindert. Diese Mischungen sind es aber gerade, die am meisten verlangt werden, da sie universell einsetzbar sind.

Darüber hinaus ist die Verwendung von Verbindungen mit Sn-O-P-Bindungen, erhalten aus Phosphorsäurediestern, bekannt aus beispielsweise US-A-3,525,778.
Die aus der Literatur bekannten Zinnkatalysatoren bewirken bei ihrem Einsatz in Polysiloxanmassen jedoch die oben beschriebenen Polymerabbaureaktionen. Dies äußert sich beispielsweise in dem Verlust bzw. der Verlangsamung der Vernetzungsfähigkeit von RTV-1 Produkten.

Eine weitere Verbesserung stellt die in US-A-6,162,756 beschriebene Verwendung von Katalysatoren mit Sn-O-P-Bindungen dar, die durch Umsetzung von Phosphorsäuremonoestern mit organischen Zinnverbindungen erhalten werden. Es hat sich jedoch gezeigt, dass durch die sehr hohe Säurezahl der eingesetzten Phosphorverbindungen, dadurch bedingt, dass sich die Erfindung auf den Einsatz von Phosphorsäuremonoestern beschränkt, die mindestens in equimolaren Mengen zur Zinnverbindung oder im überschuss eingesetzt werden müssen, Probleme bei Lagerstabilität und Haftungsprobleme verursacht werden, die insbesondere bei Wasserlagerung der Verklebungen zu Tage treten.

Der Erfindung liegt die Aufgabe zugrunde, Katalysatoren für unter Abspaltung von Alkoholen aus Alkoxysilylendgruppen zu Elastomeren vernetzbare Massen mit guter Lagerstabilität bereitzustellen; die keinen Scavenger benötigen.

Gegenstand der Erfindung sind Zinnkatalysator (Z) enthaltende unter Abspaltung von Alkoholen aus Alkoxysilylendgruppen zu Elastomeren vernetzbare Massen, die als Katalysator Zinnverbindung (Z) mit einer Koordinationszahl von 5 oder 6 enthalten, in der das Zinnatom mit P=O Gruppe aufweisender Phosphorverbindung koordinativ über deren P=O Gruppe gebunden ist,
wobei die Zinnverbindung (Z) erhältlich ist durch Umsetzung von mit P=O Gruppe aufweisender Phosphorverbindung, die ausgewählt wird aus Verbindungen der allgemeinen Formel (I)

O=PR¹ ₘ(OR²)ₙ(OH)₃₋ₘ₋ₙ (I),

in der
- **n**: den Werte 3, wenn **m** den Wert 0 aufweist,
- **n**: die Werte 0, 1, oder 2, wenn **m** die Werte 1, 2 oder 3 aufweist,
**m+n** die Werte 1, 2 oder 3 aufweist,
**R**^{**1**} **und R**^{**2**} C₁-C₃₀ -Kohlenwasserstoffreste, die substituiert sein können durch Hydroxyl-, Halogen-, Cyanoreste oder Reste der allgemeinen Formel (II)

[(CR³ ₂)_{b}-O]_{c}(CR⁴ ₂)d-L-M (II),

in der
- **R**^{**3**} und **R**^{**4**}: einen Wasserstoff-, Methyl- oder Hydroxylrest,
- **b und d**: die Werte 2 oder 3,
- **c**: ganzzahlige Werte von 1 bis 15,
- **L**: einen Rest aus der Gruppe -O-, -COO-, -OOC-, -CONR⁵-, -NR⁶CO- und -CO-,
- **R**^{**5**} und **R**^{**6**}: einen Wasserstoff- oder C₁-C₁₀-Alkylrest und
- **M**: einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten,
mit der Maßgabe, daß die Reste **R**^{**3**} und **R**^{**4**} an jedem Kohlenstoffatom nur einmal ein Hydroxylrest sein können, Verbindungen der allgemeinen Formel (III)

O=PR⁷ ₒ(NR⁸ ₂)ₚ(OR⁹)₃₋ₒ₋ₚ (III),

in der
- **R**^{**7**}: die Bedeutungen von **R**^{**1**}**,**
- **R**^{**8**}: die Bedeutungen von **R**^{**1**}**,** wobei auch beide Reste **R**^{**8**} aneinander gebunden sein können,
- **R**^{**9**}: die Bedeutungen von **R**^{**1**} und zusätzlich Wasserstoff,
- **o**: die Werte 0, 1 oder 2,
- **p**: die Werte 1, 2 oder 3 und
- **o+p**: die Werte 1, 2 oder 3 bedeuten,
und Kondensaten oder Hydrolysaten von Verbindungen der allgemeinen Formeln (I) und (III) mit einer oder mehreren P-O-P-Bindungen,
mit organischer Zinnverbindung, die ausgewählt wird aus Verbindung der allgemeinen Formel (IV)

R¹⁰ ₄₋ᵣSnXᵣ (IV),

Verbindung der allgemeinen Formel (V)

R¹⁰ ₂SnY (V),

Verbindung der allgemeinen Formel (VI)

R¹⁰ ₃SnY_{1/2} (VI),

und Verbindung der allgemeinen Formel (VII)

R¹⁰SnY_{3/2} (VII),

in denen
- **R**^{**10**}: C₁-C₃₀-Kohlenwasserstoffreste, die substituiert sein können durch Halogen- oder Cyanoreste,
- **X**: Halogen-, -OH, -0R¹⁰, -SR¹⁰, -OOCR¹⁰, -NR¹⁰₂, -NHR¹⁰, -OSiR¹⁰₃ oder -OSi(OR¹⁰)₃,
- **Y**: O oder S und
- **r**: die Werte 1, 2 oder 3 bedeuten.

Die zu Elastomeren vernetzbare Massen zeigen gute Lagerstabilität.

Bei der Zinnverbindung (Z) ist das Zinnatom an die P=O Gruppe aufweisender Phosphorverbindung koordinativ gebunden. Eine kovalente Bindungen zwischen der Phosphorverbindung und dem Zinnatom ist nicht erforderlich, ist aber möglich. Dadurch ist Zinnverbindung (Z) noch in der Lage, die Kondensationsreaktion an den Alkoxysilylendgruppen katalysieren zu können. Gleichzeitig ist wird aber der in den Massen vorhandene Alkohol nicht hinreichend aktiviert, um störende Reaktionen einzugehen, die die Lagerstabilität herabsetzen könnten.

Die eingesetzte Phosphorverbindung der allgemeinen Formel (I)sind beispielsweise Tributylphosphat, Tris(butoxyethyl)phosphat, Tris(lauryltriethylenglycol)phosphat, Triphenylphosphinoxid, Bis(aryl oder alkyl)hydroxymethylphosphonsäure oder Phenylphosphonsäure.
Bevorzugt sind die Triester der Orthophosphorsäure.

Beispiele für eingesetzte Phosphorverbindung der allgemeinen Formel (III) sind beispielsweise Hexamethylphosphorsäuretriamid oder Tripiperidinophosphinoxid.

Beispiele für die organischen Zinnverbindungen der allgemeinen Formeln (IV) bis (VII) sind DBTA, DBTL, oder Umsetzungsprodukte aus DBTA, DBTL und/oder DBTO mit Alkoxysilanen, welche auch erst in situ in der zu Elastomeren vernetzbare Masse umgesetzt werden können.

Der Zinnkatalysator (Z) kann durch Umsetzung der eingesetzten Phosphorverbindung, die ausgewählt wird aus Verbindungen der allgemeinen Formeln (I) und (III) mit organischer Zinnverbindung, die ausgewählt wird aus Verbindung der allgemeinen Formel (IV) bis (VII) vor Zugabe zur zu Elastomeren vernetzbare Masse hergestellt werden oder erst in der Masse hergestellt werden.

Die zu Elastomeren vernetzbaren Massen sind beliebige Massen, die unter Abspaltung von Alkoholen aus Alkoxysilylendgruppen zu Elastomeren vernetzbar sind. Beispiele hierfür sind Massen auf der Grundlage von Alkoxysilylendgruppen aufweisenden Organopolysiloxanen, Polyethern, Polyestern, Polyurethanen, Polyharnstoffen und Copolymeren aus Organopolysiloxanen, Polyethern, Polyestern, Polyurethanen und Polyharnstoffen. Bevorzugt sind unter Abspaltung von Alkoholen zu Elastomeren vernetzbare Organopolysiloxanmassen, insbesondere einkomponentige Organopolysiloxanmassen (RTV-1-Alkoxymassen).

Bei den unter Abspaltung von Alkoholen zu Elastomeren vernetzbaren einkomponentigen Organopolysiloxanmassen (RTV-1-. Alkoxymassen) wird durch Einsatz der Zinnkatalysatoren (Z) die Haftung auf verschieden Untergründen verbessert.

RTV-1-Alkoxymassen enthalten vorzugsweise Alkoxygruppenterminierte Organopolysiloxane (A), insbesondere lineare Diorganosiloxane der allgemeinen Formel (VIII)

R¹¹ _{f}(R¹²O)_{3-f}Si-(O-SiR₂)_{g}-O-SiR¹¹_{f}(OR¹²)_{3-f} (VIII),

worin
- **R, R**^{**11**} und **R**^{**12**}: jeweils einwertige, gegebenenfalls mit Fluor-, Chlor-, Brom-, C₁-C₄-Alkoxyalkyl- oder Cyanogruppen substituierte C₁-C₈-Kohlenwasserstoffreste,
- **f**: die Werte 0 oder 1 und
- **g**: solche Werte bedeutet, die einer Viskosität des Organopolysiloxans (A) von 0,05 bis 1000 Pa.s entsprechen, bedeuten.

Bevorzugt als Reste R, **R**^{**11**} und **R**^{**12**} sind unsubstituierte C₁-C₄-Alkylreste, wobei der Methylrest besonders bevorzugt ist.

Die Organopolysiloxane (A) besitzen vorzugsweise eine Viskosität von 100 bis 700000 mPa.s, insbesondere von 20000 bis 350000 mPa.s, jeweils gemessen bei 23° C.

Vorzugsweise enthalten die RTV-1-Alkoxymassen mindestens 35, insbesondere mindestens 45 Gew.-% und vorzugsweise höchstens 80, insbesondere höchstens 70 Gew.-% Organopolysiloxane (A).

Die die RTV-1-Alkoxymassen enthalten vorzugsweise Alkoxysilane (B), die insbesondere die allgemeine Formel (IX)

R¹³ _{µ}Si(OR¹⁴)_{4-µ} (IX),

aufweisen, worin
- **R**^{**13**} und **R**^{**14**}: einwertige, gegebenenfalls mit Fluor-, Chlor-, Brom-, C₁-C₄-Alkoxyalkyl- oder Cyanogruppen substituierte C₁-C₁₃-Kohlenwasserstoffreste und
- µ: die Werte 0 oder 1 bedeuten.

Auch Teilhydrolysate von Alkoxysilan (B), welche durch Hydrolyse und Kondensation von insbesondere 2 bis 4 Alkoxysilanen entstanden sind, können anwesend sein.

Teilhydrolysate (B) sind beispielsweise Hexamethoxydisiloxan und Hexaethoxydisiloxan.

Vorzugsweise bedeutet **R**^{**13**} unsubstituierte C₁-C₆-Kohlenwasserstoffreste, insbesondere Methyl-, Ethyl- und Propylreste.

Vorzugsweise bedeutet **R**^{**14**} unsubstituierte C₁-C₆-Kohlenwasserstoffreste, insbesondere Methyl-, Ethyl- Vinyl- und Propylreste.

Vorzugsweise enthalten die RTV-1-Alkoxymassen mindestens 0,01, insbesondere mindestens 0,1 Gew.-% und vorzugsweise höchstens 3, insbesondere höchstens 1 Gew.-% Zinnkatalysator (Z).

Zusätzlich zu den vorgenannten Komponenten können die RTV-1-Alkoxymassen weitere, an sich bekannte Komponenten enthalten, wie Vernetzer, Füllstoffe, Pigmente, lösliche Farbstoffe, Riechstoffe, Weichmacher, Fungicide, harzartige Organopolysiloxane, einschließlich solcher aus (CH₃)₃SiO_{1/2}und SiO_{4/2}- Einheiten, rein-organische Harze, wie Homo- oder Mischpolymerisate des Acrylnitrils, Styrols, Vinylchlorids oder Propylens, wobei solche rein-organischen Harze, insbesondere Mischpolymerisate aus Styrol und n-Butylacrylat, bereits in Gegenwart von in den endständigen Einheiten je eine Sigebundene Hydroxylgruppe aufweisendem Diorganopolysiloxan durch Polymerisation der genannten Monomeren mittels freier Radikale erzeugt worden sein können, Korrosionsinhibitoren, Oxydationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit SiC-gebundenen Mercaptoalkylresten, sowie zellenerzeugende Mittel, z.B. Azodicarbonamid. Desgleichen können Haftvermittler, zugegeben werden.

Vorzugsweise enthalten die RTV-1-Alkoxymassen Füllstoffe. Beispiele für Füllstoffe sind nicht verstärkende Füllstoffe, also Füllstoffe mit einer BET-Oberfläche von bis zu 50 m²/g, wie carbonsäurebelegte Kreiden, Quarz, Diatomeenerde, Calciumsilikat, Zirkoniumsilikat, Zeolithe, Metalloxidpulver wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g wie pyrogen hergestellte Kieselsäure, gefällte Kieselsäure, Ruß wie Furnace- und Acetylenruß und Silicium-Aluminium-Mischoxide großer BET-Oberfläche; faserförmige Füllstoffe wie Asbest sowie Kunststofffasern.

Die genannten Füllstoffe können hydrophobiert sein, beispielsweise durch die Behandlung mit Organosilanen bzw. - siloxanen oder mit Stearinsäure oder durch Veretherung von Hydroxylgruppen zu Alkoxygruppen. Es kann eine Art von Füllstoff, es kann auch ein Gemisch von mindestens zwei Füllstoffen eingesetzt werden.

Bei alleiniger Verwendung von verstärkender Kieselsäure als Füllstoff können transparente RTV-1-Alkoxymassen hergestellt werden.

Vorzugsweise enthalten die RTV-1-Alkoxymassen mindestens 2, insbesondere mindestens 5 Gew.-% und vorzugsweise höchstens 40, insbesondere höchstens 15 Gew.-% Füllstoff.

Als Weichmacher können beispielsweise Alkylaromaten oder bei Raumtemperatur flüssige, durch Trimethylsiloxygruppen endblockierte Dimethylpolysiloxane eingesetzt werden.

Bevorzugt ist die Anwesenheit von aminoalkylfunktionellen Silanen als Haftvermittler. Diese fördern die Bildung der Zinnkatalysatoren (Z). Bevorzugt sind Silane der allgemeinen Formel (X)

A-(CH₂)₃-Si(OR¹⁵)₃ (X),

worin
- **A**: die Bedeutungen NH₂, NH-CH₂CH₂NH₂, NHR und Glycidoxy und
- **R**^{**15**}: die Bedeutung von R aufweist.

Besonders bevorzugt als Haftvermittler ist γ-Aminopropyltriethoxysilan.

Vorzugsweise enthalten die RTV-1-Alkoxymassen 0,5 bis 5, insbesondere höchstens 3 Gew.-% Haftvermittler.

Ebenfalls Gegenstand der Erfindung ist ein Verfahren zur Erhöhung der Lagerstabilität von unter Abspaltung von Alkoholen aus Alkoxysilylendgruppen zu Elastomeren vernetzbaren Massen, bei dem den Massen Zinnkatalysator (Z) zugesetzt wird.

Die Zinnkatalysator (Z) enthaltenden Massen eignen sich ausgezeichnet beispielsweise als Abdichtungsmasse; für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau, sowie z.B. zur Herstellung von Schutzüberzügen, oder von gummielastischen Formkörpern sowie für die Isolierung von elektrischen oder elektronischen Vorrichtungen.

In den allgemeinen Formeln (I) bis (X) sind alle Reste **A, L, M, X, Y, R, R**^{**1**} **bis R**^{**15**} sowie alle Indizes **b, c, d, f, g, m, n, o, p, r** und **µ** unabhängig voneinander gleich oder verschieden.

In allen Formeln gilt die Vierbindigkeit des Siliciumatoms und Zinnatoms sowie die Fünfbindigkeit des Phosphoratoms.
Der Begriff Organopolysiloxane soll im Rahmen der vorliegenden Erfindung dimere, oligomere und polymere Siloxane umfassen.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 25° C. Sofern nicht anders angegeben, werden die nachstehenden Beispiele bei einem Druck der umgebenden Atmosphäre, also bei etwa 1000 hPa, und Raumtemperatur, also bei etwa 20° C, bzw. bei einer Temperatur, die sich beim Zusammengeben der Reaktanden bei Raumtemperatur ohne zusätzliche Heizung oder Kühlung einstellt, durchgeführt.

Die Lagerstabilität wird anhand der Vulkanisation der RTV-1-Alkoxymassen (= Compounds) zu elastischen Kautschuken als Funktion der Lagerzeit ermittelt. Die Alterung der Compounds wird durch die Lagerung bei 50°C bzw. 100°C beschleunigt.

### Beispiele

### Beispiel 1:

Ein Umsetzungsprodukt aus 1,0g Dibutylzinndiacetat und 2,0g Tetraethoxysilan wird mit 1,5g Tributylphosphat versetzt und die Mischung NMR-spektroskopisch untersucht. Im ¹¹⁹Sn-NMR-Spektrum ist eine starke Hochfeldverschiebung des Signals zu beobachten, die auf die Komplexbilung zurückzuführen ist, währen das ³¹-P-NMR-Spektrum anzeigt, dass keine P-O-C-Bindungen gespalten werden.

### Beispiel 2:

In einem Planetenmischer mit Vakuumausrüstung werden unter Wasserausschluß 55,4 Gew.-Teile eines Polydimethylsiloxans mit -OSi(OCH₃)₂(CH₃)-Endgruppen, das eine Viskosität von 80000 mPas besitzt, mit 31,2 Gew.-Teilen eines Polydimethylsiloxans mit --OSi(CH₃)₃-Endgruppen (Viskosität 100 mPas) und 4,0 Gew.-Teilen Methyltrimethoxysilan vermischt. Dann werden 8,0 Gew.-Teile pyrogene Kieselsäure eingemischt, zum Schluß 0,8 Gew.-Teile des nach Beispiel 1 hergestellten Gemisches. Nach Homogenisieren im Vakuum wird der Compound in feuchtigkeitsdichte Gebinde abgefüllt. Das Ergebnis ist in Tabelle 1 aufgeführt.

### Beispiele 3-5:

In einem Planetenmischer mit Vakuumausrüstung werden unter Wasserausschluß 55,4 Gew.-Teile eines Polydimethylsiloxans mit -OSi(OCH₃)₂(CH₃)-Endgruppen, das eine Viskosität von 80000 mPas besitzt, mit 31,2 Gew.-Teilen eines Polydimethylsiloxans mit --OSi(CH₃)₃-Endgruppen (Viskosität 100 mPas) und 4,0 Gew.-Teilen Methyltrimethoxysilan, 1,0 Gew.-Teilen Phosphorsäureester vermischt. Dann werden 8,0 Gew.-Teile pyrogene Kieselsäure eingemischt, zum Schluß 0,4 Gew.-Teile eines Zinnkatalysators (Umsetzungs-produkt, das aus 4 Teilen Tetraethoxysilan mit 2,2 Teilen Dibutylzinndiacetat hergestellt wurde). Nach Homogenisieren im Vakuum wird der Compound in feuchtigkeitsdichte Gebinde abgefüllt. Die verwendeten Phosphorsäureester und die Ergebnisse sind in Tabelle 1 aufgeführt.

### Vergleichsbeispiel 6 (nicht erfindungsgemäß) :

Es wird wie unter Beispiel 2-5 vorgegangen, außer daß kein Phosphorsäureester zugesetzt wird. Die Ergebnisse sind in Tabelle 1 aufgeführt.

### Tabelle 1

Während die Compounds mit Phosphorsäureesterzusatz vulkanisieren, wird ohne Zusatz kein Kautschuk erhalten. Diese Beispiele zeigen die Unterdrückung der unerwünschten Equilibrierung.

**Tabelle 1**

| | P=O-Verbindung | Vulkanisation nach 1 d 100°C | Vulkanisation nach 2 Wochen 50°C |
|---|---|---|---|
| Beispiel 2 | Produkt aus Beispiel 1 | Gut | Gut |
| Beispiel 3 | Wacker Stabilisator S45 (Polyglykoletherphosphat) | Gut | Gut |
| Beispiel 4 | Fyrol FR-2^{*)} | Gut | Gut |
| Beispiel 5 | Tripiperidinophosphinoxid | Gut | Gut |
| Vergleichsbeispiel 6 | --- | Keine | Keine |

| | | | |
|---|---|---|---|
| ^{*)} Phosphorsäuretriester von Akzo Nobel Chemicals GmbH | | | |

### Beispiel 7:

In einem Planetenmischer mit Vakuumausrüstung werden unter Wasserausschluß 55,4 Gew.-Teile eines Polydimethylsiloxans mit -OSi(OCH₃)₂(CH₃)-Endgruppen, das eine Viskosität von 80000 mPas besitzt, mit 31,2 Gew.-Teilen eines Polydimethylsiloxans mit --OSi(CH₃)₃-Endgruppen (Viskosität 100 mPas) und 4,0 Gew.-Teilen Methyltrimethoxysilan vermischt. Dann werden 8,0 Gew.-Teile pyrogene Kieselsäure eingemischt, zum Schluß 0,8 Gew.-Teile des nach Beispiel 1 hergestellten Gemisches. Nach Homogenisieren im Vakuum wird der Compound in feuchtigkeitsdichte Gebinde abgefüllt. Die Hautbildungszeiten (HBZ) sind in Tabelle 2 aufgeführt.

### Beispiele 8-9:

In einem Planetenmischer mit Vakuumausrüstung werden unter Wasserausschluß 54,4 Gew.-Teile eines Polydimethylsiloxans mit -OSi(OCH₃)₂(CH₃)-Endgruppen, das eine Viskosität von 80000 mPas besitzt, mit 30,5 Gew.-Teilen eines Polydimethylsiloxans mit -Si(OCH₃)₃-Endgruppen (Viskosität 100 mPas), 4,0 Gew.-Teilen Methyltrimethoxysilan, 1,8 Gew.-Teilen eines 3-Aminopropylgruppenhaltigen Polydimethylsiloxans und 1,0 Gew.-Teilen Phosphorsäureester vermischt. Dann werden 7,9 Gew.-Teile pyrogene Kieselsäure eingemischt, zum Schluß 0,4 Gew.-Teile eines Zinnkatalysators (Umsetzungsprodukt, das aus 4 Teilen Tetraethoxysilan mit 2,2 Teilen Dibutylzinndiacetat hergestellt wurde). Nach Homogenisieren im Vakuum wird der Compound in feuchtigkeitsdichte Gebinde abgefüllt. Die verwendeten Phosphorsäureester und die Hautbildungszeiten (HBZ) sind in Tabelle 2 aufgeführt

### Vergleichsbeispiel 10 (nicht erfindungsgemäß):

Es wird wie unter Beispiel 7-9 vorgegangen, außer daß kein Phosphorsäureester zugesetzt wird. Das Ergebnis ist in Tabelle 2 aufgeführt.

**Tabelle 2**

| | Phosphorsäureester | HBZ nach 1 d RT [min] | Vulkanisa -tion nach 1 d RT [min] | HBZ nach 1 Woche 50°C [min] | Vulkanisation nach 1 Woche 50°C [min] |
|---|---|---|---|---|---|
| Beispiel 7 | Produkt aus Beispiel 1 | 20 | Gut | 20 | Gut |
| Beispiel 8 | Wacker Stabilisator S45 (Polyglykoletherphosphat) | 15 | Gut | 15 | Gut |
| Beispiel 9 | Fyrol FR-2^{*)} | 25 | Gut | 30 | Gut |
| Vergleichsbeispiel 10 | --- | 30 | Gut | > 180 | keine |

| | | | | | |
|---|---|---|---|---|---|
| ^{*)} Phosphorsäuretriester von Akzo Nobel Chemicals GmbH | | | | | |

## Patentansprüche

1. Zinnkatalysator (Z) enthaltende unter Abspaltung von Alkoholen aus Alkoxysilylendgruppen zu Elastomeren vernetzbare Massen, die als Katalysator Zinnverbindung (Z) mit einer Koordinationszahl von 5 oder 6 enthalten, in der das Zinnatom mit P=O Gruppe aufweisender Phosphorverbindung koordinativ über deren P=O Gruppe gebunden ist, wobei die Zinnverbindung (Z) erhältlich ist durch Umsetzung von mit P=0 Gruppe aufweisender Phosphorverbindung, die ausgewählt wird aus Verbindungen der allgemeinen Formel (I)
O=PR¹ ₘ(OR²)ₙ(OH)₃₋ₘ₋ₙ (I)
in der
**n** den Wert 3, wenn **m** den Wert 0 aufweist,
**n** die Werte 0, 1, oder 2, wenn **m** die Werte 1, 2 oder 3 aufweist,
**m+n** die Werte 1, 2 oder 3 aufweist,
**R**^{**1**} **und R**^{**2**} C₁-C₃₀ -Kohlenwasserstoffreste, die substituiert sein können durch Hydroxyl-, Halogen-, Cyanoreste oder Reste der allgemeinen Formel (II)
[(CR³ ₂)_{b}-O]_{c}(CR⁴ ₂)_{d}-L-M (II),
in der
**R**^{**3**} **und R**^{**4**} einen Wasserstoff-, Methyl- oder Hydroxylrest,
**b und d** die Werte 2 oder 3,
**c** ganzzahlige Werte von 1 bis 15,
**L** einen Rest aus der Gruppe -O-, -COO-, -OOC-,. -CONR⁵-, -NR⁶CO- und -CO-,
**R**^{**5**} und **R**^{**6**} einen Wasserstoff- oder C₁-C₁₀-Alkylrest und
**M** einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten,
mit der Maßgabe, daß die Reste R³ und R⁴ an jedem Kohlenstoffatom nur einmal ein Hydroxylrest sein können, Verbindungen der allgemeinen Formel (III)
O=PR⁷ ₒ (NR⁸ ₂)p (OR9) ₃₋ₒ₋ₚ (III),
in der
**R**^{**7**} die Bedeutungen von **R**^{**1**}**,**
**R**^{**8**} die Bedeutungen von **R**^{**1**}**,** wobei auch beide Reste **R**^{**8**} aneinander gebunden sein können,
**R**^{**9**} die Bedeutungen von **R**^{**1**} und zusätzlich Wasserstoff,
**o** die Werte 0, 1 oder 2,
**p** die Werte 1, 2 oder 3 und
**o+p** die Werte 1, 2 oder 3 bedeuten,
und Kondensaten oder Hydrolysaten von Verbindungen der allgemeinen Formeln (I) und (III) mit einer oder mehreren P-O-P-Bindungen,
mit organischer Zinnverbindung, die ausgewählt wird aus Verbindung der allgemeinen Formel (IV)
R¹⁰ ₄₋ᵣSnXᵣ (IV),
Verbindung der allgemeinen Formel (V)
R¹⁰ ₂SnY (V),
Verbindung der allgemeinen Formel (VI)
R¹⁰ ₃SnY_{1/2} (VI),
und Verbindung der allgemeinen Formel (VII)
R¹⁰SnY_{3/2} (VII),
in denen
**R**^{**10**} C₁-C₃₀-Kohlenwasserstoffreste, die substituiert sein können durch Halogen- oder Cyanoreste,
**X** Halogen-, -OH, -OR¹⁰, -SR¹⁰, -OOCR¹⁰, -NR¹⁰₂, -NHR¹⁰, -OSiR¹⁰₃ oder -OSi(OR¹⁰)₃,
**Y** O oder S und
**r** die Werte 1, 2 oder 3 bedeuten.

2. Zinnkatalysator (Z) enthaltende Massen nach Anspruch 1, welche Massen auf der Grundlage von Alkoxysilylendgruppen aufweisenden Organopolysiloxanen, Polyethern, Polyestern, Polyurethanen, Polyharnstoffen und Copolymeren aus Organopolysiloxanen, Polyethern, Polyestern, Polyurethanen und Polyharnstoffen sind.

3. Zinnkatalysator (Z) enthaltende Massen nach Anspruch 1 oder 2, welche unter Abspaltung von Alkoholen zu Elastomeren vernetzbare einkomponentige Organopolysiloxanmassen (RTV-1-Alkoxymassen) sind.

4. Zinnkatalysator (Z) enthaltende RTV-1-Alkoxymassen nach Anspruch 3, die 0,01 bis 3 Gew.-% Zinnkatalysator (Z) enthalten.

5. Zinnkatalysator (Z) enthaltende RTV-1-Alkoxymassen nach Anspruch 1 bis 4, die aminoalkylfunktionelle Silanen als Haftvermittler enthalten.

6. Verfahren zur Erhöhung der Lagerstabilität von unter Abspaltung von Alkoholen aus Alkoxysilylendgruppen zu Elastomeren vernetzbaren Massen, bei dem den Massen Zinnkatalysator (Z) gemäß Anspruch 1 zugesetzt wird.

## Claims

1. Compositions which are crosslinkable with elimination of alcohols from alkoxysilyl end groups to give elastomers, and which comprise a tin catalyst (T), and in which the catalyst present is a tin compound (T) having a coordination number of 5 or 6, in which the tin atom has coordinate bonding to the P=O group of a phosphorus compound having a P=O group, the tin compound (T) being obtainable via reaction of a phosphorus compound having a P=O group and selected from compounds of the general formula (I)
O=PR¹ ₘ(OR²)ₙ(OH)₃₋ₘ₋ₙ (I),
where
**n** is the value 3, if **m** has the value 0,
**n** is the values 0, 1, or 2, if **m** has the values 1, 2, or 3,
**m+n** is the values 1, 2, or 3,
**R**^{**1**} **and R**^{**2**} are C₁-C₃₀-hydrocarbon radicals, which may have substitution by hydroxy, halogen, or cyano radicals, or radicals of the general formula (II)
[(CR³ ₂)_{b}-O]_{c}(CR⁴ ₂)_{d}-L-M (II),
where
**R**^{**3**} **and R**^{**4**} are a hydrogen radical, methyl radical, or hydroxy radical,
**b and d** are the values 2 or 3,
**c** is integral values from 1 to 15,
**L** is a radical from the group -O-, -COO-, -OOC-, -CONR⁵-, -NR⁶CO-, and -CO-,
**R**^{**5**} and **R**^{**6**} are a hydrogen radical or a C₁-C₁₀-alkyl radical, and
**M** is a monovalent C₁-C₂₀-hydrocarbon radical, unsubstituted or substituted with hydroxy, fluoro, chloro, bromo, C₁-C₁₀-alkoxyalkyl, or cyano groups, with the proviso that on each carbon atom only one of the radicals R³ and R⁴ may be a hydroxy radical, compounds of the general formula (III)
O=PR⁷ ₒ(NR⁸ ₂)ₚ(OR⁹)₃₋ₒ₋ₚ (III),
where
**R**^{**7**} is as defined for **R**^{**1**}**,**
**R**^{**8**} is as defined for **R**^{**1**}**,** where it is also possible for the two radicals **R**^{**8**} to have bonding to one another,
**R**^{**9**} is as defined for **R**^{**1**}**,** or is hydrogen,
**o** is the values 0, 1, or 2,
**p** is the values 1, 2, or 3, and
**o+p** is the values 1, 2, or 3,
and condensates or hydrolysates of compounds of the general formulae (I) and (III) having one or more P-O-P bonds,
with an organic tin compound which is selected from a compound of the general formula (IV)
R¹⁰ ₄₋ᵣSnXᵣ (IV),
a compound of the general formula (V)
R¹⁰ ₂SnY (V),
a compound of the general formula (VI)
R¹⁰ ₃SnY_{1/2} (VI),
and a compound of the general formula (VII)
R¹⁰SnY_{3/2} (VII),
where
R¹⁰ is C₁-C₃₀-hydrocarbon radicals, which may have substitution by halogen radicals or by cyano radicals,
**X** is halo, -OH, -OR¹⁰ -SR¹⁰, -OOCR¹⁰, -NR¹⁰₂, -NHR¹⁰, -OSiR¹⁰₃ or -OSi (OR¹⁰)₃,
**Y** is O or S, and
**r** is the values 1, 2, or 3.

2. Compositions comprising a tin catalyst (T), according to Claim 1, which are compositions based on compounds having alkoxysilyl end groups, these being organopolysiloxanes, polyethers, polyesters, polyurethanes, polyureas, and copolymers of organopolysiloxanes, polyethers, polyesters, polyurethanes and polyureas.

3. Compositions comprising a tin catalyst (T), according to Claim 1 or 2, which are single-component organopolysiloxane compositions crosslinkable with elimination of alcohols to give elastomers (RTV1 alkoxy compositions).

4. RTV1 alkoxy compositions comprising a tin catalyst (T), according to Claim 3, which comprise from 0.01 to 3% by weight of tin catalyst (T).

5. RTV1 alkoxy compositions comprising a tin catalyst (T), according to any of Claims 1 to 4, which comprise aminoalkyl-functional silanes as coupling agents.

6. Process for increasing the storage stability of compositions crosslinkable with elimination of alcohols from alkoxysilyl end groups to give elastomers, in which tin catalyst (T) according to Claim 1 is added to the compositions.

## Revendications

1. Masses contenant un catalyseur stannique (Z), réticulables en élastomères avec dissociation d'alcools de groupes terminaux alcoxysilyle, qui contiennent comme catalyseur le composé stannique (Z) avec un nombre de coordination de 5 ou 6, dans lequel l'atome d'étain est lié par coordination avec le composé phosphore présentant le groupe P=O via son groupe P=O,
où le composé stannique (Z) peut être obtenu par transformation d'un composé du phosphoré présentant des groupes P=O qui est choisi parmi des composés de formule générale (I)
O=PR¹ ₘ(OR²)ₙ(OH)₃₋ₘ₋ₙ (I),
dans laquelle
n présente la valeur 3, lorsque m présente la valeur 0,
n présente les valeurs 0, 1 ou 2, lorsque m présente les valeurs 1, 2 ou 3,
m+n présente la valeur 1, 2 ou 3,
R¹ et R² signifient des radicaux hydrocarbonés en C₁ à C₃₀, qui peuvent être substitués par des radicaux hydroxyle, halogène, cyano ou des radicaux de formule générale (II)
[(CR³ ₂)_{b}-O]_{c}(CR⁴ ₂)_{d}-L-M (II),
dans laquelle
R³ et R⁴ signifient un radical hydrogène, méthyle ou hydroxyle,
b et d signifient les valeurs 2 ou 3,
c signifie des valeurs entières de 1 à 15,
L signifie un radical du groupe constitué par -O-, - COO-, -OOC-, -CONR⁵-, -NR⁶CO- et -CO-,
R⁵ et R⁶ signifient un radical hydrogène ou alkyle en C₁ à C₁₀, et
M signifie un radical hydrocarboné en C₁ à C₂₀ monovalent, le cas échéant substitué par des groupes hydroxyle, fluor, chlore, brome, alcoxyalkyle en C₁ à C₁₀ ou cyano,
à condition que les radicaux R³ et R⁴ sur chaque atome de carbone ne puissent être qu'une seule fois un radical hydroxyle,
des composés de formule générale (III)
O=PR⁷ ₒ(NR⁸ ₂)ₚ(OR⁹)₃₋ₒ₋ₚ (III),
dans laquelle
R⁷ a les significations de R¹,
R⁸ a les significations de R¹, les deux radicaux R⁸ pouvant également être liés l'un à l'autre,
R⁹ a les significations de R¹ et signifie en outre hydrogène,
o signifie les valeurs 0, 1 ou 2,
p signifie les valeurs 1, 2 ou 3 et
o+p signifie les valeurs 1, 2 ou 3,
et des condensats ou des hydrolysats de composés de formules générales (I) et (III) avec une ou plusieurs liaisons P-O-P,
avec un composé organostannique choisi parmi le composé de formule générale (IV)
R¹⁰ ₄₋ᵣSnXᵣ (IV),
le composé de formule générale (V)
R¹⁰ ₂SnY (V),
le composé de formule générale (VI)
R¹⁰ ₃SnY_{1/2} (VI),
et le composé de formule générale (VII)
R¹⁰SnY_{3/2} (VII),
dans lesquelles
R¹⁰ signifie des radicaux hydrocarbonés en C₁ à C₃₀, qui peuvent être substitués par des radicaux halogène ou cyano,
X signifie halogène, -OH, -OR¹⁰, -SR¹⁰, -OOCR¹⁰, -NR¹⁰₂, -NHR¹⁰, -OSiR¹⁰₃ ou -OSi (OR¹⁰)₃,
Y signifie O ou S et
r signifie les valeurs 1, 2 ou 3.

2. Masses contenant le catalyseur stannique (Z) selon la revendication 1, lesdites masses étant à base d'organopolysiloxanes, de polyéthers, de polyesters, de polyuréthanes, de polyurées et de copolymères d'organopolysiloxanes, de polyéthers, de polyesters, de polyuréthanes et de polyurées, présentant des groupes terminaux alcoxysilyle.

3. Masses contenant le catalyseur stannique (Z) selon la revendication 1 ou 2 qui sont des masses d'organopolysiloxanes à un composant (masses alcoxy RTV-1) réticulables en élastomères avec dissociation d'alcools.

4. Masses alcoxy RTV-1 contenant le catalyseur stannique (Z) selon la revendication 3 qui contiennent 0,01 à 3% en poids de catalyseur stannique (Z).

5. Masses alcoxy RTV-1 contenant le catalyseur stannique (Z) selon les revendications 1 à 4, qui contiennent des silanes à fonctionnalité aminoalkyle comme promoteur d'adhérence.

6. Procédé pour augmenter la stabilité à l'entreposage de masses réticulables en élastomères avec dissociation d'alcools des groupes terminaux alcoxysilyle, dans lequel on ajoute aux masses le catalyseur stannique (Z) selon la revendication 1.
